# EUROPEAN PATENT APPLICATION

(11) **EP 4 002 280 A1**
(43) Date of publication of application: **25.05.2022**
(21) Application number: 20918017.3
(22) Date of filing: 24.09.2020
(51) Int. Cl.: G06T 11/00

(54) **METHOD AND APPARATUS FOR GENERATING IMAGE**

(30) Priority: 04.02.2020 CN 202010079771
(71) Applicant: Beijing Baidu Netcom Science And Technology Co., Ltd., Beijing 100085 (CN)
(72) Inventor: SUN, Hao, Beijing 100085 (CN); LI, Fu, Beijing 100085 (CN); LI, Xin, Beijing 100085 (CN); LIN, Tianwei, Beijing 100085 (CN)
(74) Representative: V.O.
(86) International application number: PCT/CN2020/117350
(87) International publication number: WO 2021/155666

(57) **Abstract**

Disclosed are a method and apparatus for generating an image. One specific embodiment of the method comprises: acquiring key point information of at least one of the five sense organs in a real facial image; according to the key point information, determining a target area where the five sense organs are located in a first cartoon facial image, wherein the first cartoon facial image is generated by means of the real facial image; and adding the five pre-established sense organ material to the target area to generate a second cartoon facial image. The embodiment increases the efficiency of image generation.

## Description

The present patent application claims priority to Chinese Patent Application No. 202010079771.X titled "METHOD AND APPARATUS FOR GENERATING IMAGE", filed on February 04, 2020, the content of which is incorporated herein by reference in its entirety.

### TECHNICAL FIELD

The present disclosure relates to a technical field of computer vision, and in particular to a method and apparatus for generating an image.

### BACKGROUND

With the gradual development of smart electronic products, applications of mobile phones or tablet computers and computers have become indispensable in people's livelihood. Further, in a network environment, users often hope to get their own cartoonized images.

In existing technologies, the cartoonized images are mostly obtained based on a cartoon filter, and only a single cartoon face image can be obtained from a single real face image.

### SUMMARY

The present disclosure presents a method and an apparatus for generating an image.

In a first aspect, some embodiments of the present disclosure provide a method for generating an image, including: acquiring key point information of at least one five-sense organ in a real face image; determining, based on the key point information, a target area where the at least one five-sense organ in a first cartoon face image is located, where the first cartoon face image is generated from the real face image; and adding a pre-established five-sense-organ material to the target area to generate a second cartoon face image.

In some embodiments, the determining, based on the key point information, the target area where the at least one five-sense organ in the first cartoon face image is located includes: determining size information and position information of the at least one five-sense organ in the real face image based on the key point information; and determining the target area based on the size information and the position information.

In some embodiments, the determining the target area based on the size information and the position information includes: determining a candidate area where the at least one five-sense organ in the first cartoon face image is located based on the size information and the position information; determining a facial area in the first cartoon face image and a five-sense-organ area in the facial area; acquiring a first overlapping area of the candidate area and the facial area; determining a second overlapping area of the first overlapping area and the five-sense-organ area; and determining the target area based on the second overlapping area.

In some embodiments, determining the facial area in the first cartoon face image and the five-sense-organ area in the facial area includes: determining a facial skin area in the first cartoon face image based on a preset skin color data range; determining a convex hull of the facial skin area as the facial area; and determining a non-facial area obtained by removing the facial skin area from the facial area as the five-sense-organ area.

In some embodiments, the determining the target area based on the second overlapping area includes: executing an eroding operation and an expanding operation on the second overlapping area to obtain the target area.

In some embodiments, the at least one five-sense organ includes an eye, the key point information includes canthus coordinates and eyeball coordinates of the eye, and the candidate area is a circle; and determining the candidate area where the at least one five-sense organ in the first cartoon face image is located based on the size information and the position information includes: determining a radius value of the candidate area based on an eye width calculated based on the canthus coordinates; and determining a circle center position of the candidate area based on the eyeball coordinates.

In some embodiments, the at least one five-sense organ includes a mouth, the key point information includes mouth corner coordinates, and the candidate area is a circle; and determining the candidate area where the at least one five-sense organ in the first cartoon face image is located based on the size information and the position information includes: determining a radius value of the candidate area based on a mouth width calculated based on the mouth corner coordinates; and determining a circle center position of the candidate area based on mouth center coordinates calculated based on the mouth corner coordinates.

In some embodiments, the first cartoon face image is generated by: inputting the real face image into a pre-trained generative adversarial network to obtain the first cartoon face image outputted from the generative adversarial network.

In some embodiments, adding the pre-established five-sense-organ material to the target area to generate the second cartoon face image includes: filling the target area based on a color value of a facial skin area in the first cartoon face image; adjusting a size and a deflection angle of the five-sense-organ material based on the key point information; and adding the adjusted five-sense-organ material to the filled target area.

In some embodiments, the at least one five-sense organ includes an eye, and the key point information includes canthus coordinates of the eye; and adjusting the size and the deflection angle of the five-sense-organ material based on the key point information includes: determining a size of the five-sense-organ material based on an eye width calculated based on the canthus coordinates; and determining the deflection angle of the five-sense-organ material based on a deflection angle, calculated based on the canthus coordinates, of the eye in the real face image.

In some embodiments, adding the pre-established five-sense-organ material to the target area to generate the second cartoon face image includes: acquiring a pre-established five-sense-organ material; adding five-sense-organ materials in the five-sense-organ material set to the target area respectively, to obtain a second cartoon face image set; and playing the second cartoon face image in the second cartoon face image set at a preset time interval to generate a dynamic image.

In a second aspect, some embodiments of the present disclosure provide an apparatus for generating an image, including: an acquiring unit configured to acquire key point information of at least one five-sense organ in a real face image; a determining unit configured to determine, based on the key point information, a target area where the at least one five-sense organ in a first cartoon face image is located, where the first cartoon face image is generated from the real face image; and a generating unit configured to add a pre-established five-sense-organ material to the target area to generate a second cartoon face image.

In some embodiments, the determining unit includes: a first determining subunit configured to determine size information and position information of the at least one five-sense organ in the real face image based on the key point information; and a second determining subunit configured to determine the target area based on the size information and the position information.

In some embodiments, the second determining subunit includes: a first determining module configured to determine a candidate area where the at least one five-sense organ in the first cartoon face image is located based on the size information and the position information; a second determining module configured to determine a facial area in the first cartoon face image and a five-sense-organ area in the facial area; an acquiring module configured to acquire a first overlapping area of the candidate area and the facial area; a third determining module configured to determine a second overlapping area of the first overlapping area and the five-sense-organ area; and a fourth determining module configured to determine the target area based on the second overlapping area.

In some embodiments, the second determining module is further configured to: determine a facial skin area in the first cartoon face image based on a preset skin color data range; determine a convex hull of the facial skin area as the facial area; and determine a non-facial area obtained by removing the facial skin area from the facial area as the five-sense-organ area.

In some embodiments, the fourth determining module is further configured to: execute an eroding operation and an expanding operation on the second overlapping area to obtain the target area.

In some embodiments, the at least one five-sense organ includes an eye, the key point information includes canthus coordinates and eyeball coordinates of the eye, and the candidate area is a circle; and the first determining module is further configured to: determine a radius value of the candidate area based on an eye width calculated based on the canthus coordinates; and determine a circle center position of the candidate area based on the eyeball coordinates.

In some embodiments, the at least one five-sense organ includes a mouth, the key point information includes mouth corner coordinates, and the candidate area is a circle; and the first determining module is further configured to: determine a radius value of the candidate area based on a mouth width calculated based on the mouth corner coordinates; and determine a circle center position of the candidate area based on mouth center coordinates calculated based on the mouth corner coordinates.

In some embodiments, the apparatus further includes a cartoon image generating unit configured to: input the real face image into a pre-trained generative adversarial network to obtain the first cartoon face image outputted from the generative adversarial network.

In some embodiments, the generating unit includes: a filling subunit configured to fill the target area based on a color value of a facial skin area in the first cartoon face image; an adjusting subunit configured to adjust a size and a deflection angle of the five-sense-organ material based on the key point information; and a first adding subunit configured to add the adjusted five-sense-organ material to the filled target area.

In some embodiments, the at least one five-sense organ includes an eye, the key point information includes canthus coordinates of the eye; and the adjusting subunit includes: a fifth determining module configured to determine a size of the five-sense-organ material based on an eye width calculated based on the canthus coordinates; and a sixth determining module configured to determine the deflection angle of the five-sense-organ material based on a deflection angle, calculated based on the canthus coordinates, of the eye in the real face image.

In some embodiments, the generating unit includes: an acquiring subunit configured to acquire a pre-established five-sense-organ material set; a second adding subunit configured to add five-sense- organ materials in the five-sense-organ material set to the target area respectively, to obtain a second cartoon face image set; and a generating subunit configured to play the second cartoon face image in the second cartoon face image set at a preset time interval to generate a dynamic image.

In a third aspect, some embodiments of the present disclosure provide a device, including: one or more processors; and a storage apparatus, storing one or more programs thereon, where the one or more programs, when executed by the one or more processors, cause the one or more processors to implement the method according to the first aspect.

In a fourth aspect, some embodiments of the present disclosure provide a computer readable medium, storing a computer program thereon, where the program, when executed by a processor, implements the method according to the first aspect.

In the method and apparatus for generating an image provided in the present disclosure, by acquiring key point information of at least one five-sense organ of five-sense organs in a real face image, then determining, based on the key point information, a target area where the at least one five-sense organ in a first cartoon face image is located, and finally adding a pre-established five-sense organ material to the target area to generate a second cartoon face image, an efficiency of image generation is improved.

### BRIEF DESCRIPTION OF THE DRAWINGS

After reading detailed description of non-limiting embodiments with reference to the following accompanying drawings, other features, objectives, and advantages of the present disclosure will become more apparent.
Fig. 1 is a diagram of an exemplary system architecture in which some embodiments of the present disclosure may be implemented;
Fig. 2 is a flowchart of a method for generating an image according to an embodiment of the present disclosure;
Fig. 3 is a method for generating an image according to the present disclosure;
Fig. 3A is a schematic diagram of a first cartoon face image of the method for generating an image according to an embodiment of the present disclosure;
Fig. 3B is a schematic diagram of a facial skin area in the first cartoon face image of the method for generating an image according to an embodiment of the present disclosure;
Fig. 3C is a schematic diagram of a target area where a left eye, a right eye, and a mouth are located of the method for generating an image according to an embodiment of the present disclosure;
Fig. 3D is a schematic diagram of an image obtained by filling the target area of the method for generating an image according to an embodiment of the present disclosure;
Fig. 3E is a schematic diagram of a second cartoon face image of the method for generating an image according to an embodiment of the present disclosure;
Fig. 4 is a flowchart of the method for generating an image according to another embodiment of the present disclosure;
Fig. 5 is a schematic diagram of a comparison of five-sense-organ locations between a real face image and the first cartoon face image of the method for generating an image according to an embodiment of the present disclosure;
Fig. 6A is a schematic diagram of a candidate area of eyes in the real face image of the method for generating an image according to an embodiment of the present disclosure;
Fig. 6B is a schematic diagram of a determined facial area in the first cartoon face image of the method for generating an image according to an embodiment of the present disclosure;
Fig. 6C is a schematic diagram of a five-sense-organ area in the facial area in the first cartoon face image of the method for generating an image according to an embodiment of the present disclosure;
Fig. 6D is a schematic diagram of a first overlapping area of the candidate area and the facial area of the method for generating an image according to an embodiment of the present disclosure;
Fig. 6E is a schematic diagram of a second overlapping area of the first overlapping area and the five-sense-organ area of the method for generating an image according to an embodiment of the present disclosure;
Fig. 6F is a schematic diagram of a determined target area based on the second overlapping area of the method for generating an image according to an embodiment of the present disclosure;
Fig. 7 is a schematic structural diagram of an apparatus for generating an image according to an embodiment of the present disclosure; and
Fig. 8 is a schematic structural diagram of a computer system of a server or a terminal adapted to implement of some embodiments of the present disclosure.

### DETAILED DESCRIPTION OF EMBODIMENTS

The present disclosure will be further described in detail below in combination with the accompanying drawings and the embodiments. It should be understood that the specific embodiments described here are merely used for explaining the relevant disclosure, rather than limiting the disclosure. In addition, it should be further noted that, for ease of description, only the portions related to the relevant disclosure are shown in the accompanying drawings.

It should be noted that some embodiments in the present disclosure and some features in the embodiments may be combined with each other on a non-conflict basis. The present disclosure will be described in detail below with reference to the accompanying drawings and in combination with the embodiments. Those skilled in the art will further understand that, while the wordings such as "first" and "second" may be used herein to describe various images, units, modules, and the like, these images, units, and modules should not be limited by these wordings. These wordings are only used to distinguish an image, a unit, and a module from other images, units, and modules.

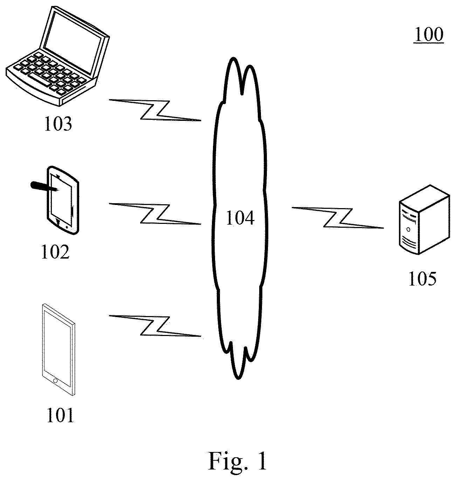

Fig. 1 shows an exemplary system architecture 100 in which a method or apparatus for generating an image of embodiments of present disclosure may be implemented.

As shown in Fig. 1, the system architecture 100 may include terminal devices 101, 102, and 103, a network 104, and a server 105. The network 104 serves as a medium providing a communication link between the terminal devices 101, 102, and 103, and the server 105. The network 104 may include various types of connections, such as wired or wireless communication links, or optical cables.

A user may interact with the server 105 using the terminal devices 101, 102, and 103 via the network 104, e.g., to receive or send a message. The terminal devices 101, 102, and 103 may be provided with various client applications, such as an image collecting application, an image processing application, a social application, an e-commerce application, and a search application.

The terminal devices 101, 102, and 103 may be hardware, or may be software. When the terminal devices 101, 102, and 103 are hardware, the terminal devices may be various electronic devices having display screens, including but not limited to a smart phone, a tablet computer, a laptop portable computer, a desktop computer, and the like. When the terminal devices 101, 102, and 103 are software, the terminal devices may be installed in the above-listed electronic devices, or may be implemented as a plurality of software programs or software modules, or may be implemented as a single software program or software module. This is not specifically limited here.

The server 105 may be a server that provides various services, such as a back-end server that provides support for an application installed on the terminal devices 101, 102, and 103. The server 105 may acquire key point information of at least one five-sense organ of five-sense organs in a real face image uploaded by the terminal devices 101, 102, and 103, then determine, based on the key point information, a target area where the at least one five-sense organ in a first cartoon face image is located, and finally add a pre-established five-sense-organ material to the target area to generate a second cartoon face image.

It should be noted that the method for generating an image provided in the present disclosure may be executed by the server 105 or by the terminal devices 101, 102, and 103. Accordingly, the apparatus for generating an image may be provided in the server 105 or in the terminal devices 101, 102, and 103.

It should be noted that the server may be hardware, or may be software. When the server is hardware, the server may be implemented as a distributed server cluster composed of a plurality of servers, or may be implemented as a single server. When the server is software, the server may be implemented as a plurality of software programs or software modules (e.g., software programs or software modules for providing distributed services), or may be implemented as a single software program or software module. This is not specifically limited here.

It should be understood that the numbers of terminal devices, networks, and servers in Fig. 1 are merely illustrative. Any number of terminal devices, networks, and servers may be provided based on actual requirements.

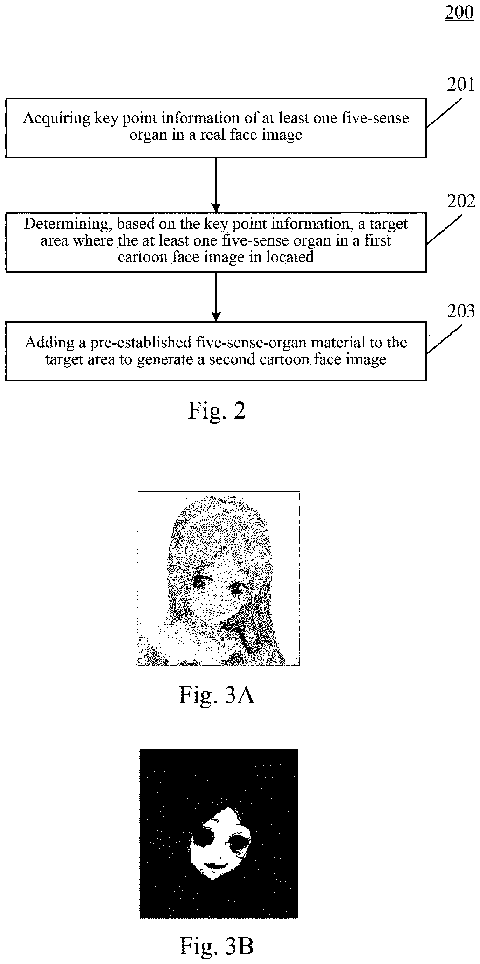

Further referring to Fig. 2, a process 200 of a method for generating an image according to an embodiment of the present disclosure is shown. The method for generating an image includes the following steps.

Step 201: acquiring key point information of at least one five-sense organ of five-sense organs in a real face image.

In the present embodiment, an executing body (e.g., the server or the terminal shown in Fig. 1) of the method for generating an image may first acquire the key point information of the at least one five-sense organ of the five-sense organs in the real face image. The real face image may be an image obtained by capturing a face of a user via a terminal camera, or an image selected by the user from a local or cloud photo album. The key point information of the at least one five-sense organ in the real face image may include canthus coordinates, eyeball coordinates, mouth corner coordinates, nasal tip coordinates, coordinates at both ends of a nose wing, coordinates at both ends of an eyebrow, and the like. The key point information of the at least one five-sense organ in the real face image may be acquired based on an active shape model (ASM), an active appearance model (AAM), a cascaded pose regression (CPR) algorithm, a deep alignment network (DAN), a convolutional neural network (CNN), or the like.

Step 202: determining, based on the key point information, a target area where the at least one five-sense organ in a first cartoon face image is located.

In the present embodiment, the executing body may determine the target area where the at least one five-sense organ in the first cartoon face image is located based on the key point information acquired in step 201. The executing body may determine, based on the key point information, a position of the target area, and then determine the target area based on a preset shape and a size of the target area. The executing body may also determine size information and position information of the at least one five-sense organ in the real face image based on the key point information, and then determine the target area based on the size information and the position information. There are many known models and data for key point extraction of the real face image, while there is no known model or data for key point extraction of a cartoon face image. If model training is performed, a lot of labeled data is required, and an accuracy cannot be guaranteed. Therefore, by determining the target area where the at least one five-sense organ in the first cartoon face image is located based on the key point information in the real face image, it is possible to further improve the efficiency of image generation.

In the present embodiment, the first cartoon face image is generated from the real face image. A cartoon face image corresponds to a real face image. The cartoon face image may include a "two-dimensional" image, and the "two-dimension" is opposite to "three-dimension,". The "three-dimension" means "a dimension-space where we exist", i.e., the real world. The two-dimension refers to a visional world imagined by human beings, and may be embodied in, e.g., animation, cartoons, and games.

In some optional implementations of the present embodiment, the first cartoon face image is generated by: inputting the real face image into a pre-trained generative adversarial network, to obtain the first cartoon face image outputted from the generative adversarial network. The pre-trained generative adversarial network refers to a deep learning model developed on the basis of a generative adversarial network (GAN), for example, the generative adversarial network (GAN), a cycle-consistent generative adversarial network (CycleGan), a high-precision facial attribute editing model AttGAN, a star-type generative adversarial network (StarGAN), a spatial transformer generative adversarial network (STGAN), a dual generative adversarial network (DualGAN), or a DiscoGAN. The pre-trained generative adversarial network generally includes a generator G and a discriminator D. There are two data domains X and Y respectively. G is configured for emulating data in the X domain into emulated real data and placing them in real data, while D is configured for distinguishing the emulated real data from the real data. After gaming between the two, an emulating effect of G is getting increasingly powerful, and a distinguishing effect of D is also getting increasingly powerful. Until D can no longer determine whether data is real or is generated by G, an adversarial process reaches a dynamic balance.

In some optional implementations of the present embodiment, the first cartoon face image may also be generated based on a style transfer algorithm and/or an exaggerated deformation operation on the five sense organs.

Step 203: adding a pre-established five-sense-organ material to the target area to generate a second cartoon face image.

In the present embodiment, the executing body may add the pre-established five-sense-organ material to the target area determined in step 202 to generate the second cartoon face image. The five-sense-organ material may be a dynamic or static five-sense-organ image, which may be pre-drawn, or may be pre-generated based on a real five-sense-organ image.

In some optional implementations of the present embodiment, adding the pre-established five-sense-organ material to the target area to generate the second cartoon face image includes: filling the target area based on a color value of a facial skin area in the first cartoon face image; adjusting a size and a deflection angle of the five-sense-organ material based on the key point information; and adding the adjusted five-sense-organ material to the filled target area. The filling of the target area and the adjusting of the size and the deflection angle of the five-sense-organ material further optimize an effect of the generated second cartoon face image. When quality requirements of the generated image are low or the target area matches the five-sense-organ material well, the pre-established five-sense-organ material may also be directly added to the target area.

In the present implementation, the color value of the facial skin area in the first cartoon face image may include an average color value of the facial skin area in the first cartoon face image, and may also include an average color value of a skin area close to the target area.

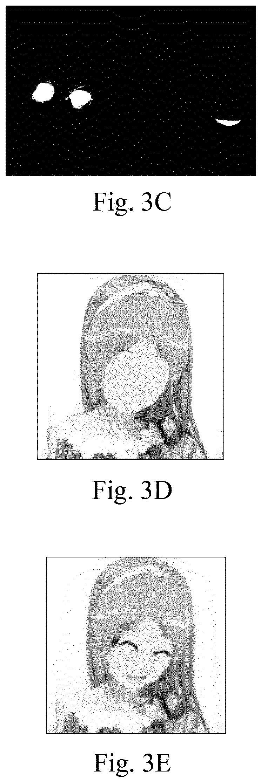

As an example, the executing body acquires key point information of a left eye, a right eye, and a mouth. Fig. 3A shows the first cartoon face image; Fig. 3B shows a facial skin area in the first cartoon face image; Fig. 3C shows a target area where the left eye, the right eye, and the mouth are located; Fig. 3D shows an image obtained by filling the target area based on a color value of the facial skin area in the first cartoon face image; and Fig. 3E shows a second cartoon face image.

In some optional implementations of the present embodiment, the at least one five-sense organ includes an eye, the key point information includes canthus coordinates of the eye; and adjusting the size and the deflection angle of the five-sense-organ material based on the key point information includes: determining the size of the five-sense-organ material based on an eye width calculated based on the canthus coordinates; and determining the deflection angle of the five-sense-organ material based on a deflection angle of the eye in the real face image calculated based on the canthus coordinates. As an example, a width of an eye material in the five-sense-organ material may be a preset number of times of the eye width calculated from the canthus coordinates, a length may be enlarged or narrowed in proportion to the width, and a specific number of times may be set based on actual needs. A deflection angle of the eye material of the at least one five-sense-organ material may be identical with the deflection angle of the eye in the real face image, or a difference between the deflection angle of the eye in the real face image and a preset angle, and a specific angle may be set based on actual needs. Similarly, a width and a deflection angle of a mouth material may also be determined based on the mouth corner coordinates.

In some optional implementations of the present embodiment, the executing body may also adjust the size and the deflection angle of the five-sense-organ material based on a size and a deflection angle of a face in the first cartoon face image.

In some optional implementations of the present embodiment, adding the pre-established five-sense-organ material to the target area to generate the second cartoon face image includes: acquiring a pre-established five-sense-organ material set; adding five-sense-organ materials in the five-sense-organ material set to the target area respectively, to obtain a second cartoon face image set; and playing the second cartoon face images in the second cartoon face image set at a preset time interval to generate a dynamic image. As an example, by adding five-sense-organ materials such as opening the mouth, closing the mouth, opening an eye, and closing the eye, a cartoon face in the dynamic image may present an action such as blinking or opening the mouth. In existing technologies, a cartoon image needs to be manually drawn and colored by a related professional. If it is required to produce a dynamic image, a large number of intermediate frames are required to be produced, which is inefficient. By the present implementation, an efficiency of producing a dynamic image is improved.

In the method provided in the above embodiments of the present disclosure, by acquiring key point information of at least one five-sense organ in a real face image; determining, based on the key point information, a target area where the at least one five-sense organ in a first cartoon face image is located, where the first cartoon face image is generated from the real face image; and adding a pre-established five-sense-organ material to the target area to generate a second cartoon face image, multiple cartoon face images may be generated for a single real face image, thereby improving the efficiency of image generation.

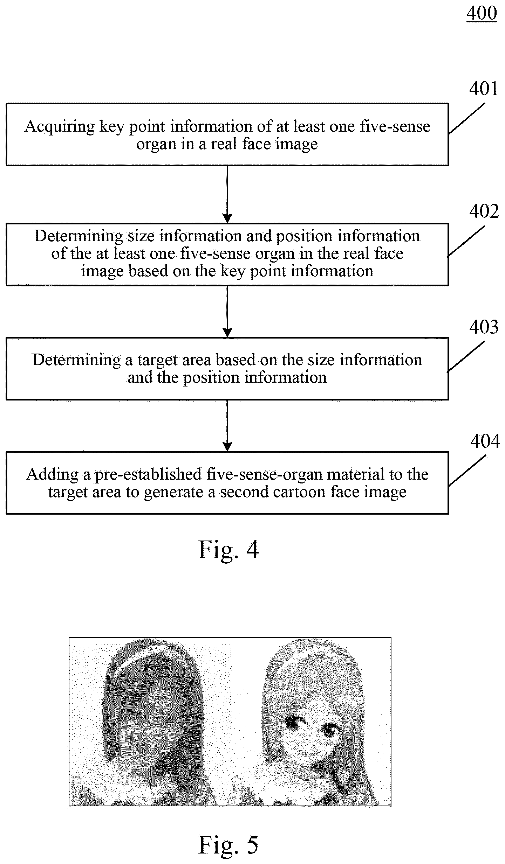

Further referring to Fig. 4, a process 400 of the method for generating an image according to another embodiment is shown. The process 400 of the method for generating an image includes the following steps.

Step 401: acquiring key point information of at least one five-sense organ in a real face image.

In the present embodiment, an executing body (e.g., the server or the terminal shown in Fig. 1) of the method for generating an image may first acquire the key point information of the at least one five-sense organ in the real face image.

Step 402: determining size information and position information of the at least one five-sense organ in the real face image based on the key point information.

In the present embodiment, the executing body may determine the size information and the position information of the at least one five-sense organ in the real face image based on the key point information acquired in step 401. As an example, a width and a position of an eye may be determined based on canthus coordinates of the eye, or a width and a position of a mouth may be determined based on mouth corner coordinates.

Step 403: determining a target area based on the size information and the position information.

In the present embodiment, the executing body may determine the target area based on the size information and the position information determined in step 402. The executing body may determine a size of the target area based on the size information, determine a position of the target area based on the position information, and may also accurately determine a range of the target area based on other information.

In some optional implementations of the present embodiment, determining the target area based on the size information and the position information includes: determining a candidate area where the at least one five-sense organ in the first cartoon face image is located based on the size information and the position information; determining a facial area in the first cartoon face image and the five-sense-organ area in the facial area; acquiring a first overlapping area of the candidate area and the facial area; determining a second overlapping area of the first overlapping area and the five-sense-organ area; and determining the target area based on the second overlapping area. As an example, the candidate area is a rectangle, and a length and a width of the candidate area may be determined based on the size information. If the candidate area is a circle, and a radius of the candidate area may be determined based on the size information.

Sometimes, after a cartoon face image is generated from a real face image, a position and a size of an eye will change to a certain extent, and there is not an exact correspondence between the two. As shown in Fig. 5, an eye in a cartoon face image will be larger, and its position will be lower. Therefore, the position of the eye in the cartoon face image cannot be directly positioned based on the position of the eye in the real face image. The candidate area where the at least one five-sense organ in the first cartoon face image is located is first determined based on the size information and the position information, and then narrowed based on other information, thereby further improving the accuracy of the target area.

In some optional implementations of the present embodiment, determining the facial area in the first cartoon face image and the five-sense-organ area in the facial area includes: determining the facial skin area in the first cartoon face image based on a preset skin color data range; determining a convex hull of the facial skin area as the facial area; and determining a non-facial area obtained by removing the facial skin area from the facial area as the five-sense-organ area.

In the present implementation, the skin color data range may be determined in a HSV (hue, saturation, value) color space. Compared with a RGB space, the HSV space can represent a tone, a hue, and a brightness of a color very intuitively, thereby facilitating a comparison between colors. For example, an H-dimensional range of the red color in the HSV space is 0 to 10 and 160 to 180, while in the RGB, the red color cannot be expressed by a certain range value. Taking an Asian as an example, because a face thereof is substantially dark yellow, a position of a dark yellow area may be found. For example, an upper boundary may be defined as H,S,V=[10, 15, 210], a lower boundary may be defined as H,S,V=[25, 95, 255], and an area between the two boundaries may be considered as the skin area. In addition, a denoising operation may also be performed on the obtained skin area to remove noise such as hair, such that the obtained facial skin area is cleaner and more complete.

In some optional implementations of the present embodiment, determining the target area based on the second overlapping area includes: executing an eroding operation and an expanding operation on the second overlapping area to obtain the target area. Both the erosion and the expansion are basic computations in mathematical morphology. The erosion may be "narrowing" a range of the target area, may essentially narrow an image boundary, and may thus be used to eliminate isolated points and remove background noise. The expansion is a reverse operation of the erosion, and is equivalent to expanding a boundary of the target area. The eroding operation is first used to narrow the image boundary, and then the expanding operation is used to restore the image boundary. The isolated points removed in this process have been deleted and thus cannot be restored. Therefore, through the two operations, undesired areas or isolated points may be removed.

In some optional implementations of the present embodiment, the at lease one five-sense organ includes an eye, the key point information includes canthus coordinates and eyeball coordinates, and the candidate area is a circle; and determining the candidate area where the at least one five-sense organ in the first cartoon face image is located based on the size information and the position information includes: determining a radius value of the candidate area based on an eye width calculated based on the canthus coordinates; and determining a circle center position of the candidate area based on the eyeball coordinates. The eye width may be directly determined as the radius value of the candidate area, or a preset times of the eye width may be determined as the radius value of the candidate area. Similarly, the eyeball coordinates may be used as the circle center position, or the eyeball coordinates may be increased or decreased as required to obtain the circle center position. Here, if both key point information of the left eye and key point information of the right eye are obtained, a width of the left eye and a width of the right eye may be calculated respectively, and the larger one of the two widths may be used as the radius value of the candidate area.

In some optional implementations of the present embodiment, the at least one five-sense organ includes a mouth, the key point information includes mouth corner coordinates, and the candidate area is a circle; and determining the candidate area where the at least one five-sense organ in the first cartoon face image is located based on the size information and the position information includes: determining a radius value of the candidate area based on a mouth width calculated based on the mouth corner coordinates; and determining the circle center position of the candidate area based on mouth center coordinates calculated based on the mouth corner coordinates. The mouth width may be directly determined as the radius value of the candidate area, or a half of the mouth width may be determined as the radius value of the candidate area. Similarly, a mouth center may be used as the circle center position, or the mouth center coordinates may be increased or decreased as required to obtain the circle center position.

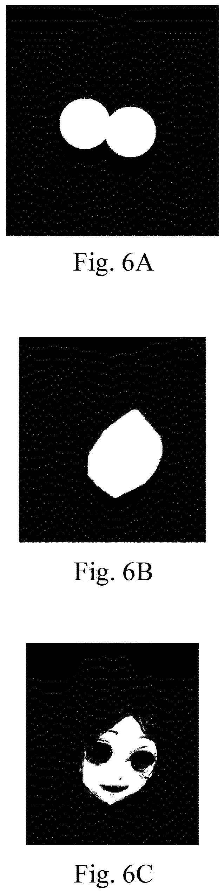

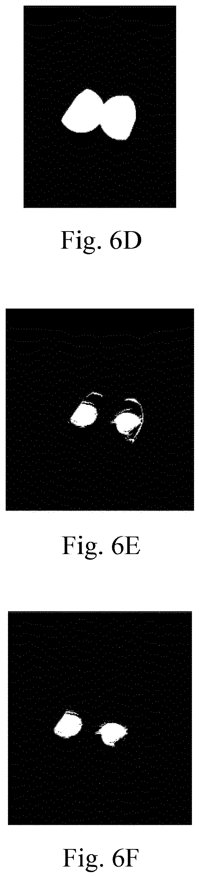

As an example, Fig. 6A shows a candidate area of two eyes in the real face image; Fig. 6B shows a determined facial area in the first cartoon face image; Fig. 6C shows a five-sense-organ area in the facial area in the first cartoon face image; Fig. 6D shows a first overlapping area of the candidate area and the facial area; Fig. 6E shows a second overlapping area of the first overlapping area and the five sense organ area; and Fig. 6F shows determining a target area based on the second overlapping area.

Step 404: adding a pre-established five-sense-organ material to the target area to generate a second cartoon face image.

In the present embodiment, the executing body may add the pre-established five-sense-organ material to the target area determined in step 403 to generate the second cartoon face image.

Operations in step 401 and step 404 in the present embodiment are substantially identical to the operations in step 201 and step 203. The description will not be repeated here.

As can be seen from Fig. 4, compared with the corresponding embodiment of Fig. 2, the process 400 of the method for generating an image in the present embodiment determines the target area based on the size information and the position information of the at least one five-sense organ in the real face image. Therefore, the solution described in the present embodiment determines the target area with better effects, thereby improving the quality of the generated image.

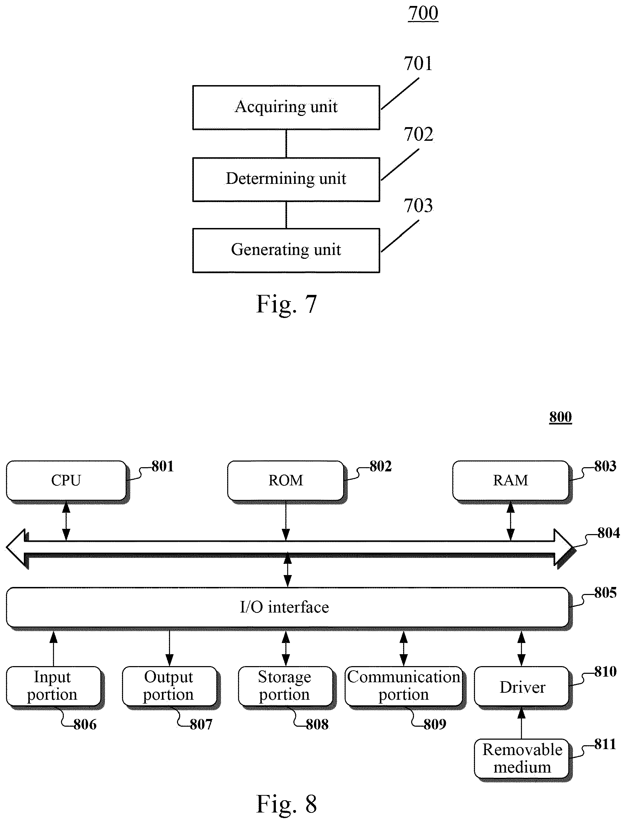

Further referring to Fig. 7, as an implementation of the method shown in the above figures, an embodiment of the present disclosure provides an apparatus for generating an image. The embodiment of the apparatus corresponds to the embodiment of the method shown in Fig. 2. The apparatus may be specifically applied to various electronic devices.

As shown in Fig. 7, the apparatus 700 for generating an image of the present embodiment includes: an acquiring unit 701, a determining unit 702, and a generating unit 703. The acquiring unit is configured to acquire key point information of at least one five-sense organ in a real face image; the determining unit is configured to determine, based on the key point information, a target area where the at least one five-sense organ in a first cartoon face image is located, where the first cartoon face image is generated from the real face image; and the generating unit is configured to add a pre-established five-sense-organ material to the target area to generate a second cartoon face image.

Step 201, step 202, and step 203 in the corresponding embodiment of Fig. 2 may be referred to for specific processing of the acquiring unit 701, the determining unit 702, and the generating unit 703 of the apparatus 700 for generating an image in the present embodiment.

In some optional implementations of the present embodiment, the determining unit includes: a first determining subunit configured to determine size information and position information of the at least one five-sense organ in the real face image based on the key point information; and a second determining subunit configured to determine the target area based on the size information and the position information.

In some optional implementations of the present embodiment, the second determining subunit includes: a first determining module configured to determine a candidate area where the at least one five-sense organ in the first cartoon face image is located based on the size information and the position information; a second determining module configured to determine a facial area in the first cartoon face image and a five-sense-organ area in the facial area; an acquiring module configured to acquire a first overlapping area of the candidate area and the facial area; a third determining module configured to determine a second overlapping area of the first overlapping area and the five-sense-organ area; and a fourth determining module configured to determine the target area based on the second overlapping area.

In some optional implementations of the present embodiment, the second determining module is further configured to: determine a facial skin area in the first cartoon face image based on a preset skin color data range; determine a convex hull of the facial skin area as the facial area; and determine a non-facial area obtained by removing the facial skin area from the facial area as the five-sense-organ area.

In some optional implementations of the present embodiment, the fourth determining module is further configured to: execute an eroding operation and an expanding operation on the second overlapping area to obtain the target area.

In some optional implementations of the present embodiment, the at least one five-sense organ includes an eye, the key point information includes canthus coordinates and eyeball coordinates of the eye, and the candidate area is a circle; and the first determining module is further configured to: determine a radius value of the candidate area based on an eye width calculated based on the canthus coordinates; and determine a circle center position of the candidate area based on the eyeball coordinates.

In some optional implementations of the present embodiment, the at least one five-sense organ includes a mouth, the key point information includes mouth corner coordinates, and the candidate area is a circle; and the first determining module is further configured to: determine a radius value of the candidate area based on a mouth width calculated based on the mouth corner coordinates; and determine a circle center position of the candidate area based on mouth center coordinates calculated based on the mouth corner coordinates.

In some optional implementations of the present embodiment, the apparatus further includes a cartoon image generating unit configured to: input the real face image into a pre-trained generative adversarial network to obtain the first cartoon face image outputted from the generative adversarial network.

In some optional implementations of the present embodiment, the generating unit includes: a filling subunit configured to fill the target area based on a color value of a facial skin area in the first cartoon face image; an adjusting subunit configured to adjust a size and a deflection angle of the five-sense-organ material based on the key point information; and a first adding subunit configured to add the adjusted five-sense-organ material to the filled target area.

In some optional implementations of the present embodiment, the at least one five-sense organ includes an eye, the key point information includes canthus coordinates of the eye; and the adjusting subunit includes: a fifth determining module configured to determine a size of the five-sense-organ material based on an eye width calculated based on the canthus coordinates; and a sixth determining module configured to determine the deflection angle of the five-sense-organ material based on a deflection angle, calculated based on the canthus coordinates, of the eye in the real face image.

In some optional implementations of the present embodiment, the generating unit includes: an acquiring subunit configured to acquire a pre-established five-sense-organ material set; a second adding subunit configured to add five-sense- organ materials in the five-sense-organ material set to the target area respectively, to obtain a second cartoon face image set; and a generating subunit configured to play the second cartoon face image in the second cartoon face image set at a preset time interval to generate a dynamic image.

The apparatus provided in the above embodiments of the present disclosure acquires key point information of at least one five-sense organ in a real face image; determines, based on the key point information, a target area where the at least one five-sense organ in a first cartoon face image is located, where the first cartoon face image is generated from the real face image; and adds a pre-established five-sense-organ material to the target area to generate a second cartoon face image, thereby improving the efficiency of image generation.

Referring to Fig. 8 below, a schematic structural diagram of a computer system 800 adapted to implement a server or a terminal of embodiments of the present disclosure is shown. The server or the terminal shown in Fig. 8 is merely an example, and should not impose any limitation on the functions and scope of use of the embodiments of the present disclosure.

As shown in Fig. 8, the computer system 800 includes a central processing unit (CPU) 801, which may execute various appropriate actions and processes in accordance with a program stored in a read only memory (ROM) 802 or a program loaded into a random access memory (RAM) 803 from a storage portion 808. The RAM 803 further stores various programs and data required by operations of the system 800. The CPU 801, the ROM 802, and the RAM 803 are connected to each other through a bus 804. An input/output (I/O) interface 805 is also connected to the bus 804.

The following components may be connected to the I/O interface 805: an input portion 806 including a keyboard, a mouse, or the like; an output portion 807 including a cathode ray tube (CRT), a liquid crystal display (LCD), a speaker, or the like; a storage portion 808 including a hard disk, or the like; and a communication portion 809 including a network interface card, such as a LAN card and a modem. The communication portion 809 performs communication processing via a network, such as the Internet. A driver 810 is also connected to the I/O interface 805 as required. A removable medium 811, such as a magnetic disk, an optical disk, a magneto-optical disk, and a semiconductor memory, may be installed on the driver 810 as required, such that a computer program read therefrom is installed in the storage portion 808 as needed.

In particular, according to the embodiments of the present disclosure, the process described above with reference to the flow chart may be implemented as a computer software program. For example, the embodiments of the present disclosure include a computer program product, which includes a computer program that is tangibly embedded in a computer readable medium. The computer program includes a program code for executing the method as shown in the flow chart. In such an embodiment, the computer program may be downloaded and installed from a network via the communication portion 809, and/or may be installed from the removable medium 811. The computer program, when executed by the central processing unit (CPU) 801, implements the above functions defined by the method of the present disclosure. It should be noted that the computer readable medium according to the present disclosure may be a computer readable signal medium or a computer readable medium or any combination of the above two. An example of the computer readable medium may include, but is not limited to: electric, magnetic, optical, electromagnetic, infrared, or semiconductor systems, apparatuses, elements, or a combination of any of the above. A more specific example of the computer readable medium may include, but is not limited to: an electrical connection with one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical memory, a magnetic memory, or any suitable combination of the above. In the present disclosure, the computer readable medium may be any tangible medium containing or storing programs, which may be used by, or used in combination with, a command execution system, apparatus, or element. In the present disclosure, the computer readable signal medium may include a data signal in the base band or propagating as a part of a carrier wave, in which a computer readable program code is carried. The propagating data signal may take various forms, including but not limited to an electromagnetic signal, an optical signal, or any suitable combination of the above. The computer readable signal medium may also be any computer readable medium except for the computer readable medium. The computer readable medium is capable of transmitting, propagating or transferring programs for use by, or used in combination with, a command execution system, apparatus or element. The program code contained on the computer readable medium may be transmitted with any suitable medium, including but not limited to: wireless, wired, optical cable, RF medium, etc., or any suitable combination of the above.

A computer program code for executing operations in the present disclosure may be compiled using one or more programming languages or combinations thereof. The programming languages include object-oriented programming languages, such as Java, Smalltalk, or C++, and also include conventional procedural programming languages, such as C language, or similar programming languages. The program code may be completely executed on a user's computer, partially executed on a user's computer, executed as a separate software package, partially executed on a user's computer and partially executed on a remote computer, or completely executed on a remote computer or server. In the case where a remote computer is involved, the remote computer may be connected to a user computer through any kind of networks, including a local area network (LAN) or a wide area network (WAN), or may be connected to an external computer (for example, connected through the Internet using an Internet service provider).

The flow charts and block diagrams in the accompanying drawings illustrate architectures, functions and operations that may be implemented according to the systems, methods, and computer program products of the various embodiments of the present disclosure. In this regard, each of the blocks in the flow charts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the figures. For example, any two blocks presented in succession may be executed substantially in parallel, or sometimes be executed in a reverse sequence, depending on the functions involved. It should also be noted that each block in the block diagrams and/or flow charts as well as a combination of blocks in the block diagrams and/or flow charts may be implemented using a dedicated hardware-based system executing specified functions or operations, or by a combination of dedicated hardware and computer instructions.

The units involved in the present disclosure may be implemented by software, or may be implemented by hardware. The described units may also be provided in a processor, for example, described as: a processor including an acquiring unit, a determining unit, and a generating unit. The names of the units do not constitute a limitation to such units themselves in some cases. For example, the acquiring unit may be further described as "a unit configured to acquire key point information of at least one of five sense organs in a real face image."

In another aspect, the present disclosure further provides a computer readable medium. The computer readable medium may be included in the apparatus described in the above embodiments, or a stand-alone computer readable medium without being assembled into the apparatus. The computer readable medium carries one or more programs, where the one or more programs, when executed by the apparatus, cause the apparatus to: acquire key point information of at least one of five sense organs in a real face image; determine, based on the key point information, a target area where the five sense organs in a first cartoon face image are located, where the first cartoon face image is generated from the real face image; and add a pre-established five sense organ material to the target area to generate a second cartoon face image.

The above description only provides an explanation of the preferred embodiments and the employed technical principles of the present disclosure. It should be understood by those skilled in the art that the inventive scope involved in the present disclosure is not limited to the technical solutions formed by the particular combinations of the above-described technical features. The inventive scope should also cover other technical solutions formed by any combination of the above-described technical features or equivalent features thereof without departing from the inventive concept of the present disclosure, for example, technical solutions formed by interchanging the above-described features with, but not limited to, technical features with similar functions disclosed in the present disclosure.

## Claims

1. A method for generating an image, comprising:
acquiring key point information of at least one five-sense organ in a real face image;
determining, based on the key point information, a target area where the at least one five-sense organ in a first cartoon face image is located, wherein the first cartoon face image is generated from the real face image; and
adding a pre-established five-sense-organ material to the target area to generate a second cartoon face image.

2. The method according to claim 1, wherein determining, based on the key point information, the target area where the at least one five-sense organ in the first cartoon face image is located comprises:
determining size information and position information of the at least one five-sense organ in the real face image based on the key point information; and
determining the target area based on the size information and the position information.

3. The method according to claim 2, wherein determining the target area based on the size information and the position information comprises:
determining a candidate area where the at least one five-sense organ in the first cartoon face image is located based on the size information and the position information;
determining a facial area in the first cartoon face image and a five-sense-organ area in the facial area;
acquiring a first overlapping area of the candidate area and the facial area;
determining a second overlapping area of the first overlapping area and the five-sense-organ area; and
determining the target area based on the second overlapping area.

4. The method according to claim 3, wherein determining the facial area in the first cartoon face image and the five-sense-organ area in the facial area comprises:
determining a facial skin area in the first cartoon face image based on a preset skin color data range;
determining a convex hull of the facial skin area as the facial area; and
determining a non-facial area obtained by removing the facial skin area from the facial area as the five-sense-organ area.

5. The method according to claim 3, wherein determining the target area based on the second overlapping area comprises:
executing an eroding operation and an expanding operation on the second overlapping area to obtain the target area.

6. The method according to claim 3, wherein the at least one five-sense organ comprises an eye, the key point information comprises canthus coordinates and eyeball coordinates of the eye, and the candidate area is a circle; and
determining the candidate area where the at least one five-sense organ in the first cartoon face image is located based on the size information and the position information comprises:
determining a radius value of the candidate area based on an eye width calculated based on the canthus coordinates; and
determining a circle center position of the candidate area based on the eyeball coordinates.

7. The method according to claim 3, wherein the at least one five-sense organ comprises a mouth, the key point information comprises mouth corner coordinates, and the candidate area is a circle; and
determining the candidate area where the at least one five-sense organ in the first cartoon face image is located based on the size information and the position information comprises:
determining a radius value of the candidate area based on a mouth width calculated based on the mouth corner coordinates; and
determining a circle center position of the candidate area based on mouth center coordinates calculated based on the mouth corner coordinates.

8. The method according to claim 1, wherein the first cartoon face image is generated by:
inputting the real face image into a pre-trained generative adversarial network to obtain the first cartoon face image outputted from the generative adversarial network.

9. The method according to claim 1, wherein adding the pre-established five-sense-organ material to the target area to generate the second cartoon face image comprises:
filling the target area based on a color value of a facial skin area in the first cartoon face image;
adjusting a size and a deflection angle of the five-sense-organ material based on the key point information; and
adding the adjusted five-sense-organ material to the filled target area.

10. The method according to claim 9, wherein the at least one five-sense organ comprises an eye, and the key point information comprises canthus coordinates of the eye; and
adjusting the size and the deflection angle of the five-sense-organ material based on the key point information comprises:
determining a size of the five-sense-organ material based on an eye width calculated based on the canthus coordinates; and
determining the deflection angle of the five-sense-organ material based on a deflection angle, calculated based on the canthus coordinates, of the eye in the real face image.

11. The method according to any one of claims 1 to 10, wherein adding the pre-established five-sense-organ material to the target area to generate the second cartoon face image comprises:
acquiring a pre-established five-sense-organ material set;
adding five-sense-organ materials in the five-sense-organ material set to the target area respectively, to obtain a second cartoon face image set; and
playing the second cartoon face image in the second cartoon face image set at a preset time interval to generate a dynamic image.

12. An apparatus for generating an image, comprising:
an acquiring unit configured to acquire key point information of at least one five-sense organ in a real face image;
a determining unit configured to determine, based on the key point information, a target area where the at least one five-sense organ in a first cartoon face image is located, wherein the first cartoon face image is generated from the real face image; and
a generating unit configured to add a pre-established five-sense-organ material to the target area to generate a second cartoon face image.

13. The apparatus according to claim 12, wherein the determining unit comprises:
a first determining subunit configured to determine size information and position information of the at least one five-sense organ in the real face image based on the key point information; and
a second determining subunit configured to determine the target area based on the size information and the position information.

14. The apparatus according to claim 13, wherein the second determining subunit comprises:
a first determining module configured to determine a candidate area where the at least one five-sense organ in the first cartoon face image is located based on the size information and the position information;
a second determining module configured to determine a facial area in the first cartoon face image and a five-sense-organ area in the facial area;
an acquiring module configured to acquire a first overlapping area of the candidate area and the facial area;
a third determining module configured to determine a second overlapping area of the first overlapping area and the five-sense-organ area; and
a fourth determining module configured to determine the target area based on the second overlapping area.

15. The apparatus according to claim 14, wherein the second determining module is further configured to:
determine a facial skin area in the first cartoon face image based on a preset skin color data range;
determine a convex hull of the facial skin area as the facial area; and
determine a non-facial area obtained by removing the facial skin area from the facial area as the five-sense-organ area.

16. The apparatus according to claim 14, wherein the fourth determining module is further configured to:
execute an eroding operation and an expanding operation on the second overlapping area to obtain the target area.

17. The apparatus according to claim 14, wherein the at least one five-sense organ comprises an eye, the key point information comprises canthus coordinates and eyeball coordinates of the eye, and the candidate area is a circle; and
the first determining module is further configured to:
determine a radius value of the candidate area based on an eye width calculated based on the canthus coordinates; and
determine a circle center position of the candidate area based on the eyeball coordinates.

18. The apparatus according to claim 14, wherein the at least one five-sense organ comprises a mouth, the key point information comprises mouth corner coordinates, and the candidate area is a circle; and
the first determining module is further configured to:
determine a radius value of the candidate area based on a mouth width calculated based on the mouth corner coordinates; and
determine a circle center position of the candidate area based on mouth center coordinates calculated based on the mouth corner coordinates.

19. The apparatus according to claim 12, wherein the apparatus further comprises a cartoon image generating unit configured to:
input the real face image into a pre-trained generative adversarial network to obtain the first cartoon face image outputted from the generative adversarial network.

20. The apparatus according to claim 12, wherein the generating unit comprises:
a filling subunit configured to fill the target area based on a color value of a facial skin area in the first cartoon face image;
an adjusting subunit configured to adjust a size and a deflection angle of the five-sense-organ material based on the key point information; and
a first adding subunit configured to add the adjusted five-sense-organ material to the filled target area.

21. The apparatus according to claim 9, wherein the at least one five-sense organ comprises an eye, the key point information comprises canthus coordinates of the eye; and
the adjusting subunit comprises:
a fifth determining module configured to determine a size of the five-sense-organ material based on an eye width calculated based on the canthus coordinates; and
a sixth determining module configured to determine the deflection angle of the five-sense-organ material based on a deflection angle, calculated based on the canthus coordinates, of the eye in the real face image.

22. The apparatus according to any one of claims 12 to 21, wherein the generating unit comprises:
an acquiring subunit configured to acquire a pre-established five-sense-organ material set;
a second adding subunit configured to add five-sense-organ materials in the five-sense-organ material set to the target area respectively, to obtain a second cartoon face image set; and
a generating subunit configured to play the second cartoon face image in the second cartoon face image set at a preset time interval to generate a dynamic image.

23. An electronic device, comprising:
one or more processors; and
a storage apparatus, storing one or more programs thereon,
the one or more programs, when executed by the one or more processors, causing the one or more processors to implement the method according to any one of claims 1-11.

24. A computer readable medium, storing a computer program thereon, wherein the program, when executed by a processor, implements the method according to any one of claims 1 to 11.
